# EUROPEAN PATENT APPLICATION

(11) **EP 2 703 674 A1**
(43) Date of publication of application: **05.03.2014**
(21) Application number: 12777447.9
(22) Date of filing: 27.04.2012
(51) Int. Cl.: F16D 25/0638

(54) **POWER-TRANSMISSION DEVICE**

(30) Priority: 28.04.2011 JP 2011102058
(71) Applicant: Kabushiki Kaisha F.C.C., Shizuoka 431-1394 (JP)
(72) Inventor: ASATSUKE, Shouji, Hamamatsu-shi Shizuoka 431-1304 (JP); NAGATA, Takumi, Hamamatsu-shi Shizuoka 431-1304 (JP); ISHIMURA, Jun, Hamamatsu-shi Shizuoka 431-1304 (JP)
(74) Representative: Cohausz & Florack
(86) International application number: PCT/JP2012/061341
(87) International publication number: WO 2012/147910

(57) **Abstract**

One object of the present invention is to provide a power transmitting apparatus which can reduce the size of the power transmitting apparatus and improve the power transmitting efficiency. According to the present invention there is provided a power transmitting apparatus arranged on the way of a power transmitting path between an engine and driving wheels and adapted to connect an input from an input shaft of the engine side and an output to the driving wheel side at a predetermined gear ratio and to arbitrarily set the gear ratio during power transmission from the engine to the wheels characterized in that the power transmitting apparatus comprises a first partition member and a second partition member spline-engaged with the input shaft so as to be rotated together therewith and arranged oppositely to each other to form the hydraulic chambers; a first clutch disc group comprising driving clutch discs spline-engaged with the first partition member and driven clutch discs spline-engaged with the output member, the driving clutch discs and the driven clutch discs being alternately laminated each other; a second clutch disc group comprising driving clutch discs spline-engaged with onto the second partition member and driven clutch discs spline-engaged with the output member, the driving clutch discs and the driven clutch discs being alternately laminated each other; and a hydraulic piston actuated by hydraulic pressure supplied to the hydraulic chambers to selectively engage or disengage the driving clutch discs and driven clutch discs of either one of the first clutch disc group or the second clutch disc group in accordance with the actuated direction of the hydraulic piston, the driving power being able to be transmitted at a desirable gear ratio by selectively actuating the hydraulic piston.

## Description

### Field of the Invention

The present invention relates to a power transmitting apparatus arranged on the way of a power transmitting path between an engine and driving wheels and adapted to connect an input from an input shaft of the engine side and an output to the driving wheel side at predetermined gear ratio and to arbitrarily set the gear ratio during power transmission from the engine to the wheels in accordance with running conditions of a vehicle.

### Description of Background Art

As power transmitting apparatus for selectively transmit or cut off the driving power of an engine to wheels of vehicle, there are two types of transmissions such as a manual transmission (MT) of its speed shifting operation being manually carried out and an automatic transmission (AT) of its speed shifting operation being automatically carried out by a torque converter. Although the AT can easily achieve the speed shifting operation it has a fault of wrong in power transmitting efficiency. Accordingly, it has been proposed an AMT type power transmitting apparatus which can automatically perform the speed shifting operation without using the torque converter.

Such an AMT type power transmitting apparatus comprises a start/speed shifting clutch means for transmitting or cutting off the power transmitting path between an engine and wheels, and a plurality of gear-stage clutch means of which input and output being set at a predetermined gear ratio. The gear-stage clutch means comprises a synchronizing mechanism and a dog clutch and is formed so that the gear ratio during power transmission from an engine to wheels can be arbitrarily set by selectively connect the dog clutch to any one of gear-stage clutch means.

However, there is a problem that the speed shifting time lag would become large in the power transmitting apparatus of the prior art since the gear ratio is set by selecting an arbitral gear-stage with use of a synchronizing mechanism and a dog clutch forming the gear-stage clutch means. Accordingly the applicant of the present application has devised a power transmitting apparatus comprising driving clutch discs and driven clutch discs alternately laminated each other, and a hydraulic piston for selectively actuating the driving clutch discs and driven clutch discs to engage and disengage them so that a driving power can be transmitted at a predetermined gear ratio when the driving clutch discs and driven clutch discs are engaged.

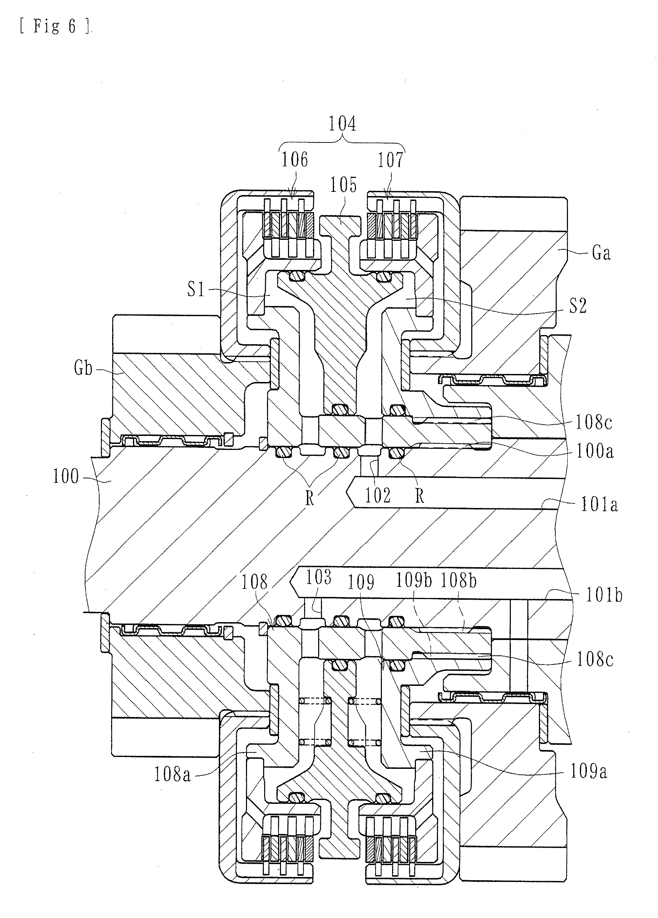

For example it has been proposed a power transmitting apparatus shown in Fig. 6 comprising a clutch means 104 formed of clutch disc groups 106, 107 arranged side by side each other for transmitting the driving power at different gear ratios (i.e. based on gears Ga, Gb of different diameters) and a hydraulic piston 105 arranged between the clutch disc groups 106, 107. The engagement of driving clutch discs and driven clutch discs of the clutch disc group 106 can be achieved by supplying an oil passage 101a formed within an input shaft 100 with hydraulic oil and leading the hydraulic oil to a hydraulic chamber S2 via a hydraulic oil supplying port 102 to move a hydraulic piston 105 toward the left in Fig. 12. On the contrary, the engagement of driving clutch discs and driven clutch discs of the clutch disc group 107 can be achieved by supplying an oil passage 101b formed within the input shaft 100 with hydraulic oil and leading the hydraulic oil to a hydraulic chamber S1 via a hydraulic oil supplying port 103 to move a hydraulic piston 105 toward the right in Fig. 12.

The input shaft 100 is formed with a spline 100a on the outer circumference at a predetermined position thereof and engaged with an interlocking member 108 via a spline 108b formed thereon. In addition, another interlocking member 109 is engaged with the interlocking member 108 via a spline-engagement of a spline 109b formed on the interlocking member 109 and the spline 108b of the interlocking member 108.

The interlocking members 108, 109 are formed respectively with partition portions 108a, 109a extending radially outward from them to form hydraulic chambers S1, S2. That is, the hydraulic chambers S1, S2 are defined by the oppositely arranged partition portions 108a, 109a and a hydraulic piston 105 arranged between them. Since such a structure is not a known invention disclosed in any document, there is no document information of the prior art to be mentioned here.

### Disclosure of the Invention

### Problems to be solved by the Invention

However in the power transmitting apparatus described above, since there are spline-engagements not only between the input shaft 100 and the interlocking member 108 but between the interlocking member 108 and the interlocking member 109, it is a problem that the size of the power transmitting apparatus would be increased. That is, the presence of the spline-engagements between the input shaft 100 and the interlocking member 108 and between the interlocking member 108 and the interlocking member 109 would increase the size in radial direction (size of the width) of the power transmitting apparatus. In addition, since the region in which the splines are formed exists long in axial direction, the axial size (size of the height) of the power transmitting apparatus would be also increased. Furthermore, it is also a problem that since the driving power of the input shaft 100 is transmitted to the interlocking member 109 via the interlocking member 108, efficient power transmission could not be achieved.

It is therefore an object of the present invention to provide a power transmitting apparatus which can reduce the size of the power transmitting apparatus and improve the power transmitting efficiency.

### Means for solving problems

For achieving the object mentioned above, there is provided, according to the present invention of claim 1, a power transmitting apparatus arranged on the way of a power transmitting path between an engine and driving wheels and adapted to connect an input from an input shaft of the engine side and an output to the driving wheel side at a predetermined gear ratio and to arbitrarily set the gear ratio during power transmission from the engine to the wheels characterized in that the power transmitting apparatus comprises a first partition member and a second partition member spline-engaged with the input shaft so as to be rotated together therewith and arranged oppositely to each other to form the hydraulic chambers; a first clutch disc group comprising driving clutch discs spline-engaged with the first partition member and driven clutch discs spline-engaged with the output member, the driving clutch discs and the driven clutch discs being alternately laminated each other; a second clutch disc group comprising driving clutch discs spline-engaged with onto the second partition member and driven clutch discs spline-engaged with the output member, the driving clutch discs and the driven clutch discs being alternately laminated each other; and a hydraulic piston actuated by hydraulic pressure supplied to the hydraulic chambers to selectively engage or disengage the driving clutch discs and driven clutch discs of either one of the first clutch disc group or the second clutch disc group in accordance with the actuated direction of the hydraulic piston, the driving power being able to be transmitted at a desirable gear ratio by selectively actuating the hydraulic piston.

The present invention of claim 2 is a power transmitting apparatus of claim 1 wherein the hydraulic piston comprises a hydraulic pressure receiving portion positioned within the hydraulic chambers for receiving the hydraulic pressure, an actuating portion integrally formed with the hydraulic pressure receiving portion for engaging and disengaging the driving clutch discs and the driven clutch discs of the first clutch disc group and the second clutch disc group, and sealing means for sealing the hydraulic chambers.

The present invention of claim 3 is a power transmitting apparatus of claim 1 or 2 wherein the input shaft is formed with hydraulic oil supplying ports for supplying the hydraulic chambers with hydraulic oil, and further formed with a splined portion able to be engaged with the first and second partition members and a non-splined portion in which the openings of the hydraulic oil supplying ports are formed, and wherein the splined portion and the non-splined portion are formed on the same plane of a radial cross-section of the input shaft.

The present invention of claim 4 is a power transmitting apparatus of claim 3 wherein annular sealing members are mounted on the outer circumference of the input shaft so that they encircle the openings of the hydraulic oil supplying ports.

### Effects of the Invention

According to the present invention of claim 1, since the first partition member and the second partition member are spline-engaged with the input shaft so as to be rotated together therewith and arranged oppositely to each other to form the hydraulic chambers, it is possible to reduce the size of the power transmitting apparatus and to improve its power transmitting efficiency.

According to the present invention of claim 2, since the hydraulic piston comprises a hydraulic pressure receiving portion positioned within the hydraulic chambers for receiving the hydraulic pressure, an actuating portion integrally formed with the hydraulic pressure receiving portion for engaging and disengaging the driving clutch discs and the driven clutch discs of the first clutch disc group and the second clutch disc group, and sealing means for sealing the hydraulic chambers, it is possible to surely transmit the hydraulic pressure received by the hydraulic pressure receiving portion to the actuating portion and to more surely engage or disengage the driving clutch discs and driven clutch discs of either one of the first clutch disc group or the second clutch disc group.

According to the present invention of claim 3, since the input shaft is formed with hydraulic oil supplying ports for supplying the hydraulic chambers with hydraulic oil, and further formed with a splined portion able to be engaged with the first and second partition members and a non-splined portion in which the openings of the hydraulic oil supplying ports are formed, and the splined portion and the non-splined portion are formed on the same plane of a radial cross-section of the input shaft, it is possible to further reduce the axial size (size of the height) and thus the whole size of the power transmitting apparatus.

According to the present invention of claim 4, since annular sealing members are mounted on the outer circumference of the input shaft so that they encircle the openings of the hydraulic oil supplying ports, it is possible to independently seal the hydraulic oil supplying ports respectively.

### Brief Description of the Drawings

[Fig.1] A diagrammatic view showing a whole structure of a vehicle to which the power transmitting apparatus of the present invention is applied;
[Fig.2] A longitudinal sectional view showing the power transmitting apparatus of the present invention;
[Fig.3] An exploded longitudinal sectional view showing a first partition member, a second partition member, a hydraulic piston etc.;
[Fig.4] A partially enlarged view showing a region near hydraulic oil supplying ports of the input shaft of the power transmitting apparatus of the present invention;
[Fig.5] A cross-sectional view taken along a line V-V in Fig. 4; and
[Fig.6] A longitudinal sectional view showing a power transmitting apparatus of the prior art;

### Preferable modes for carrying out the Invention

Preferable embodiments of the present invention will be described with reference to accompanied drawings.

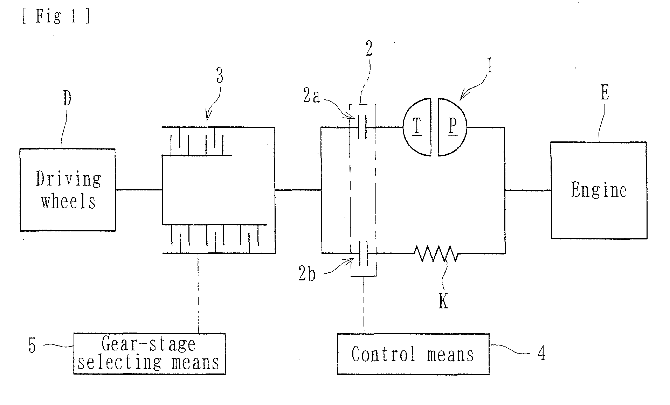

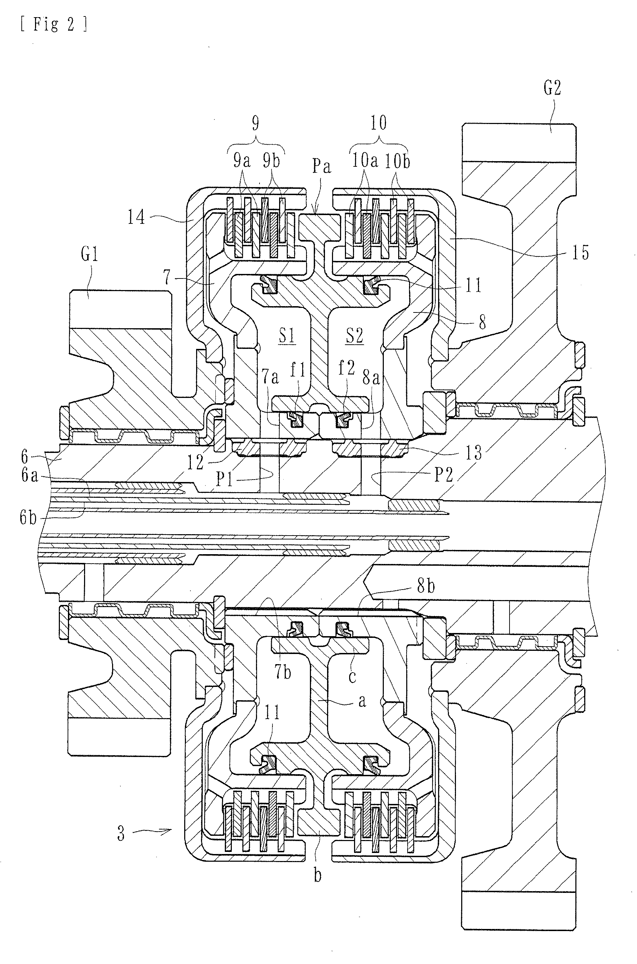

The power transmitting apparatus of the present invention is intended to transmit or cut off the driving power of an engine (driving source) E of an automobile (vehicle) to or from the wheels (driving wheels) D and mainly comprises, as shown in Figs. 1 and 2, a torque converter 1, a start/speed shifting clutch means 2, a gear-stage clutch means 3, a control means 4, and a gear-stage selecting means 5. As shown in Fig.1, the torque converter 1, the start/speed shifting clutch means 2 and the gear-stage clutch means 3 are arranged on the way of a power transmitting path from the engine E to wheels (driving wheels) D.

The torque converter 1 has a torque amplifying function for amplifying the torque from the engine E and transmitting it to the driving wheels D and mainly comprises a torque converter cover (not shown) rotated around its shaft by the driving force transmitted from the engine E and tightly containing liquid (operating oil), a pump P formed on the side of the torque converter cover, and a turbine T arranged oppositely to the pump P and rotatable at the side of the torque converter cover.

When the torque converter cover and the pump P are rotated by the driving force of the engine E, the rotational torque is transmitted to the turbine T via the liquid (operating oil) with the torque being amplified. When the turbine T is then rotated by the amplified torque, a the first driving shaft spline-engaged with the turbine T is rotated and thus amplified torque is transmitted to the driving wheels D via the gear-stage clutch means 3. Thus the power transmitting apparatus of the present invention has a driving power transmitting path (a power transmitting path of torque converter) comprising the torque converter cover, the pump P and the turbine T.

On the other hand, the torque converter cover is connected to a predetermined connecting member (not shown) via the damper mechanism K comprising coil springs and the connecting member is further fitted with a predetermined driving shaft (second driving shaft) via an input shaft 6. Accordingly the torque converter cover, the connecting member and the second driving shaft are rotated by the driving power of the engine E, and thus the driving torque of the engine E is transmitted to the gear-stage clutch means 3. That is, the second driving shaft enables to transmit the driving power of the engine E to the driving wheels D without via the power transmitting path of the torque converter 1.

As described above the first driving shaft can be rotated by the driving power of the engine E via the power transmitting path of the torque converter 1 and connected to the first clutch means 2a of the start/speed shifting clutch means 2, and the second driving shaft can be directly rotated by the driving power of the engine E without via the power transmitting path of the torque converter 1 and be connected to the second clutch means 2b of the start/speed shifting clutch means 2.

The start/speed shifting clutch means 2 is intended to transmit or cut off the driving power of the engine E to or from the driving wheels D at an arbitral timing and comprises the first clutch means 2a for transmitting the driving power of the engine E to the driving wheels D via the power transmitting path of the torque converter 1 and a second clutch means 2b for transmitting the driving power of the engine E to the driving wheels D without via the power transmitting path of the torque converter 1. The first and second clutch means 2a, 2b can be formed by multiple disc clutches.

The control means 4 can control the hydraulic oil pressure supplied to each gear-stage clutch means 3 and is configured to selectively operate the first and second clutch means 2a, 2b in accordance with conditions of vehicle. Similarly to the gear-stage selecting means 5 described later, the control means 4 may be formed for example by a microcomputer loaded on a vehicle. The gear-stage clutch means 3 is arranged between the start/speed shifting clutch means 2 and the driving wheels D on the way of the power transmitting path and its input (rotational speed of the start/speed shifting clutch means) and output (rotational speed of the driving wheels) are set at predetermined ratios.

More particularly, the gear-stage clutch means 3 of the present invention is mounted to the input shaft 6 as shown in Fig. 2. The gear-stage clutch means 3 mainly comprises a first partition member 7, a second partition member 8, a first clutch disc group 9, a second clutch disc group 10, and a hydraulic piston Pa. Gears G1, G2 have different diameters and are able to transmit the driving power to an output shaft (a shaft formed with gears mating with the gears G1, G2 and connected to the driving wheels D; not shown). A plurality of the gear-stage clutch means (not shown) other than the gear-stage clutch means 3 which are able to transmit driving power to the gears G1, G2 at desirable gear ratios are arranged in the power transmitting apparatus of the present invention.

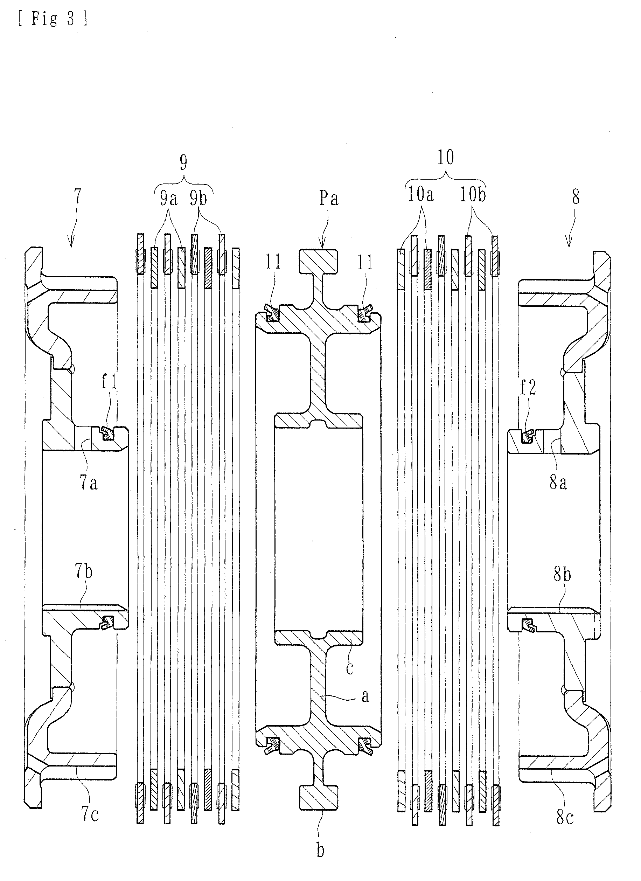

The first partition member 7 is spline-engaged with the input shaft 6 so as to be rotated together with the input shaft 6 and forms a hydraulic chamber S1 cooperating with the hydraulic piston Pa. In particular, the first partition member 7 is formed with a through aperture on which a spline 7b is formed so as to be engaged with the spline formed on the input shaft 6 as shown in Fig. 3. A reference numeral 7a denotes a hydraulic oil supplying aperture via which the operating oil can be supplied to the hydraulic chamber S1. In addition, a reference numeral 7c denotes a spline on which driving clutch discs 9a forming the first clutch disc group 9 are fitted.

The second partition member 8 is spline-engaged with the input shaft 6 so as to be rotated together with the input shaft 6 and forms a hydraulic chamber S2 cooperating with the hydraulic piston Pa. In particular, the second partition member 8 is formed with a through aperture on which a spline 8b is formed so as to be engaged with the spline formed on the input shaft 6 as shown in Fig. 3. A reference numeral 8a denotes a hydraulic oil supplying aperture via which the operating oil can be supplied to the hydraulic chamber S2. In addition, a reference numeral 8c denotes a spline on which driven clutch discs 10a forming the second clutch disc group 10 are fitted.

Thus, the first and second partition members 7, 8 are spline-engaged with the input shaft 6 and arranged oppositely to each other to form the hydraulic chambers S1, S2 with sandwiching the hydraulic piston Pa between the first and second partition members 7, 8. Reference numerals f1, f2 denote sealing members mounted respectively on the first and partition members 7, 8.

The first clutch disc group 9 comprises alternately laminated driving clutch discs 9a spline-engaged with the spline 7c of the first partition member 7 and driven clutch discs 9b spline-engaged with the output side (i.e. an output member 14 connected to the gear G1). When the driving clutch discs 9a and driven clutch discs 9b are engaged by actuation of the hydraulic piston Pa, driving power of the input shaft 6 can be transmitted to the gear G1, on the contrary, when the driving clutch discs 9a and driven clutch discs 9b are disengaged by releasing actuation of the hydraulic piston Pa, driving power of the input shaft 6 cannot be transmitted to the gear G1. The term "disengage" used herein means a condition released from the pressure applied to the clutch discs and thus is not limited only to physically separated condition.

The second clutch disc group 10 comprises alternately laminated driving clutch discs 10a spline-engaged with the spline 8c of the second partition member 8 and driven clutch discs 10b spline-engaged with the output side (i.e. an output member 15 connected to the gear G2). When the driving clutch discs 10a and driven clutch discs 10b are engaged by actuation of the hydraulic piston Pa, driving power of the input shaft 6 can be transmitted to the gear G2, on the contrary, when the driving clutch discs 10a and driven clutch discs 10b are disengaged by releasing actuation of the hydraulic piston Pa, driving power of the input shaft 6 cannot be transmitted to the gear G2.

The hydraulic piston Pa can be operated by hydraulic oil supplied to either one of the hydraulic chamber S1, S2 and selectively engage or disengage the driving clutch discs (9a, 10a) and the driven clutch discs (9b, 10b) of the first or second clutch disc groups 9 or 10 in accordance with the displaced direction of the hydraulic piston Pa. As shown in Fig. 3, the hydraulic piston Pa of the present invention comprises a hydraulic pressure receiving portion "a" positioned within the hydraulic chambers S1, S2 for receiving the hydraulic pressure, an actuating portion "b" integrally formed with the hydraulic pressure receiving portion "a" for engaging and disengaging the driving clutch discs (9a, 10a) and the driven clutch discs (9b, 10b) of the first clutch disc group 9 and the second clutch disc group 10, a sliding portion "c" provided with sealing members f1, f2 and slidable relative to the first and second partition members 7, 8, and sealing means 11 for sealing the hydraulic chambers S1, S2.

The hydraulic chambers S1, S2 are sealed from each other by the sealing means 11 mounted on the hydraulic piston Pa and seal members f1, f2 mounted respectively on the first partition member 7 and the second partition member 8. Although it is shown in the illustrated embodiment that the sealing means 11 and the sealing members f1, f2 are those having lips, it may be possible to use other types of seals such as 0-rings or gaskets.

When a hydraulic pressure is applied to the hydraulic chamber S2 by supplying hydraulic oil thereto, the hydraulic piston Pa is moved toward the left and the actuating portion "b" of the hydraulic piston Pa presses the first clutch disc group 9 and engages the driving clutch discs 9a and driven clutch discs 9b. Accordingly, the driving power of the engine E can be transmitted to the output member 14 and thus driving power corresponding to the gear ratio determined by the gear G1 can be transmitted. On the contrary, when a hydraulic pressure is applied to the hydraulic chamber S1 by supplying hydraulic oil thereto, the hydraulic piston Pa is moved toward the right and the actuating portion "b" of the hydraulic piston Pa presses the second clutch disc group 10 and engages the driving clutch discs 10a and driven clutch discs 10b. Accordingly, the driving power of the engine E can be transmitted to the output member 15 and thus driving power corresponding to the gear ratio determined by the gear G2 can be transmitted.

It may be possible to arrange any urging means (e.g. return springs etc.) for returning the hydraulic piston Pa to its initial position (neutral position) when the pressure applied to the hydraulic piston Pa is released by stopping supply of hydraulic oil to the hydraulic chambers S1, S2. When the hydraulic piston Pa is returned to the initial position, the driving clutch discs (9a, 10a) and the driven clutch discs (9b, 10b) are disengaged and the power transmission can be cut off.

As described above, the driving power of the engine E can be transmitted to the driving wheels D at a desired gear ratio by selectively moving the hydraulic piston Pa to the right or left direction by selectively supplying hydraulic oil to the hydraulic chamber S1 or S2. Since the hydraulic piston Pa can be commonly used for changing the gear ratio, it is possible to reduce the size (especially in the axial size), the number of parts and thus cost of the power transmitting apparatus.

The input shaft 6 of the present invention is formed with oil passages 6a, 6b axially extending in the input shaft 6 toward a hydraulic pressure source (not shown), and hydraulic oil supplying ports P1, P2 radially branched respectively from the oil passages 6a, 6b toward the hydraulic chambers S1, S2 (particularly, hydraulic oil supplying apertures 7a, 8a). That is, the hydraulic oil supplying port P1 is communicated with the hydraulic chamber S1 via the hydraulic oil supplying aperture 7a formed in the first partition member 7 and the hydraulic oil supplying port P2 is communicated with the hydraulic chamber S2 via the hydraulic oil supplying aperture 8a formed in the second partition member 8.

Thus, the hydraulic piston Pa can be moved toward the right direction in Fig. 2 by supplying hydraulic oil to the hydraulic chamber S1 via the oil passage 6a and the hydraulic oil supplying port P1 and applying hydraulic pressure onto the left-side surface of the hydraulic pressure receiving portion "a", and the hydraulic piston Pa can be moved toward the left direction in Fig. 2 by supplying hydraulic oil to the hydraulic chamber S2 via the oil passage 6b and the hydraulic oil supplying port P2 and applying hydraulic pressure onto the right-side surface of the hydraulic pressure receiving portion "a".

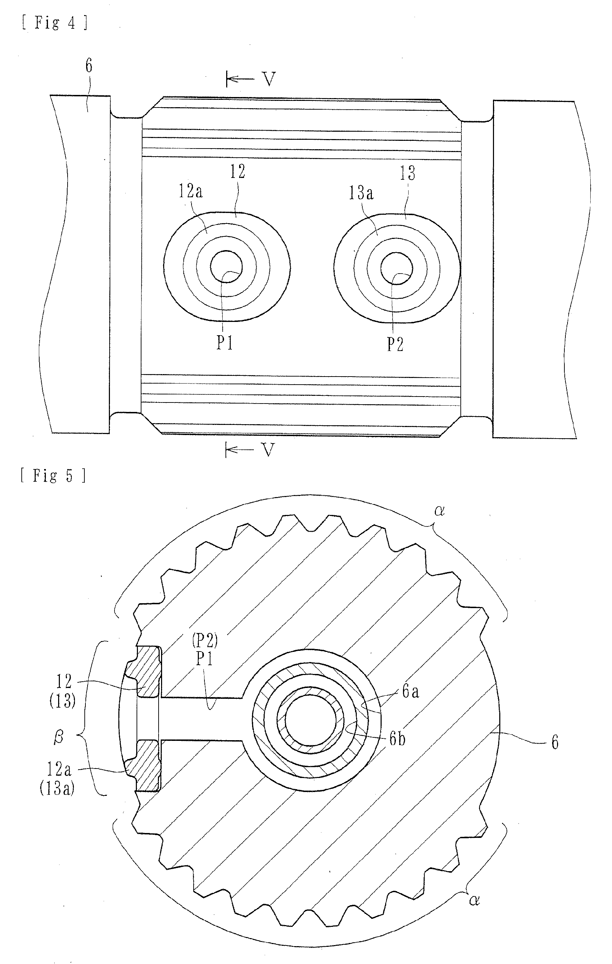

In addition, according to the present invention, the input shaft 6 is formed with a splined portion α able to be engaged with partition member 7 or 8 and a non-splined portion β in which the hydraulic oil supplying port P1, (P2) is formed, and the splined portion α and the non-splined portion β are formed on the same plane of a radial cross-section of the input shaft 6 as shown in Fig. 5. That is, the input shaft 6 is formed with the splined portion α and the non-splined portion β (in which the opening of the hydraulic oil supplying port P1, (P2) is formed) on the same plane of a radial cross-section of the input shaft 6.

Further according to the present invention, annular sealing members 12, 13 are mounted on the outer circumference of the input shaft 6 so that they encircle the openings of the hydraulic oil supplying ports P1, P2. As shown in Fig. 4, sealing members 12, 13 have oval outline configurations and are formed with circular contacting portions 12a, 13a contacted with the inner circumference of the first and second partition members 7, 8 around the periphery of the hydraulic oil supporting apertures 7a, 8a. The sealing members 12, 13 can be formed of materials having sealing characteristics such as soft metal, resin or rubber etc. by molding.

As described above, since the annular sealing member 12, (13) are mounted on the input shaft 6 so that they encircle the openings of the hydraulic oil supplying port P1, (P2), they can independently seal the hydraulic oil supplying port P1, (P2). In addition, since the sealing member 12, (13) has the oval outline configuration, it is possible to prevent of unintentional rotation of the sealing member 12, (13) relative to the recessed portion 6c of the input shaft 6. Other outline configuration of the sealing member 12, (13) and the recessed portion 6c such as a rectangular configuration may be possible if it can prevent rotation of the sealing member relative to the recessed portion.

On the other hand, the gear-stage selecting means 5 comprises e.g. a microcomputer mounted on a vehicle and can control the hydraulic pressure supplied to the gear-stage clutch means 3 and arbitrarily set the gear ratio in power transmission from the engine E to the driving wheels D with selectively engaging either one of the first clutch disc group 9 or the second clutch disc group 10. Accordingly, the control means 4 and the gear-stage selecting means 5 can selectively actuate the start/speed shifting clutch means 2 and the gear-stage clutch means 3 in accordance with pre-set modes.

According to the present invention, since the first partition member 7 and the second partition member 8 are spline-engaged with the input shaft 6 so as to be rotated together therewith and arranged oppositely to each other to form the hydraulic chambers S1, S2, it is possible to reduce the size of the power transmitting apparatus and to improve its power transmitting efficiency. That is, since both the first partition member 7 and the second partition member 8 forming the hydraulic chambers S1, S2 are directly spline-engaged with the input shaft 6, it is possible to reduce the size both in the radial direction (size of the width) and in the axial direction (size of the height) and thus the whole size of the power transmitting apparatus and efficient power transmission can be achieved.

In addition, since the hydraulic piston Pa comprises a hydraulic pressure receiving portion "a" positioned within the hydraulic chambers S1, S2 for receiving the hydraulic pressure, an actuating portion "b" integrally formed with the hydraulic pressure receiving portion "a" for engaging and disengaging the driving clutch discs 9a, 10a and the driven clutch discs 9b, 10b of the first clutch disc group 9 and the second clutch disc group 10, and sealing means 11 for sealing the hydraulic chambers S1, S2, it is possible to surely transmit the hydraulic pressure received by the hydraulic pressure receiving portion "a" to the actuating portion "b" and to more surely engage or disengage the driving clutch discs 9a, 10a and driven clutch discs 9b, 10b of either one of the first clutch disc group 9 or the second clutch disc group 10.

Furthermore, since the input shaft 6 is formed with hydraulic oil supplying ports P1, P2 for supplying the hydraulic chambers S1, S2 with hydraulic oil, and further formed with a splined portion α able to be engaged with the first and second partition members 7, 8 and a non-splined portion β in which the openings of the hydraulic oil supplying ports P1, P2 are formed, and the splined portion α and the non-splined portion β are formed on the same plane of a radial cross-section of the input shaft 6, it is possible to further reduce the axial size (size of the height) and thus the whole size of the power transmitting apparatus.

Although it has been described a preferable embodiment of the present invention, the present invention is not limited to the described and illustrated embodiment. For example, the plurality of hydraulic oil supplying ports P1, P2 may be formed on the same plane of a radial cross-section of the input shaft 6 and the annular sealing members 12, 13 may be mounted on the input shaft 6 around the oil supplying ports P1, P2 respectively. The power transmitting apparatus of the present invention may be applied to other vehicles than automobiles.

### Applicability in Industry

The present invention can be applied to any power transmitting apparatus in which the power transmitting apparatus comprises a first partition member and a second partition member spline-engaged with the input shaft so as to be rotated together therewith and arranged oppositely to each other to form the hydraulic chambers; a first clutch disc group comprising driving clutch discs spline-engaged with the first partition member and driven clutch discs spline-engaged with the output member, the driving clutch discs and the driven clutch discs being alternately laminated each other; a second clutch disc group comprising driving clutch discs spline-engaged with onto the second partition member and driven clutch discs spline-engaged with the output member, the driving clutch discs and the driven clutch discs being alternately laminated each other; and a hydraulic piston actuated by hydraulic pressure supplied to the hydraulic chambers to selectively engage or disengage the driving clutch discs and driven clutch discs of either one of the first clutch disc group or the second clutch disc group in accordance with the actuated direction of the hydraulic piston, the driving power being able to be transmitted at a desirable gear ratio by selectively actuating the hydraulic piston, although it is one having a different external view or other one to which any other function is added.

### Description of Reference numerals

- 1: torque converter
- 2: start/speed shifting clutch means
- 2a: first clutch means
- 2b: second clutch means
- 3: gear-stage clutch means
- 4: control means
- 5: gear-stage selecting means
- 6: input shaft
- 7: first partition member
- 8: second partition member
- 9: first clutch disc group
- 10: second clutch disc group
- 11: sealing means
- 12, 13: sealing member
- 14, 15: output member
- Pa: hydraulic piston
- a: hydraulic pressure receiving portion
- b: actuating portion
- c: sliding portion
- S1, S2: hydraulic chamber
- P1, P2: hydraulic oil supplying port

## Claims

1. A power transmitting apparatus arranged on the way of a power transmitting path between an engine (E) and driving wheels (D) and adapted to connect an input from an input shaft (6) of the engine side and an output to the driving wheel side at a predetermined gear ratio and to arbitrarily set the gear ratio during power transmission from the engine (E) to the wheels (D) **characterized in that** the power transmitting apparatus comprises:
a first partition member (7) and a second partition member (8) spline-engaged with the input shaft (6) so as to be rotated together therewith and arranged oppositely to each other to form the hydraulic chambers (S1, S2);
a first clutch disc group (9) comprising driving clutch discs (9a) spline-engaged with the first partition member (7) and driven clutch discs (9b) spline-engaged with the output member (14), the driving clutch discs (9a) and the driven clutch discs (9b) being alternately laminated each other;
a second clutch disc group (10) comprising driving clutch discs (10a) spline-engaged with the second partition member (8) and driven clutch discs (10b) spline-engaged with the output member (15), the driving clutch discs (10a) and the driven clutch discs (10b) being alternately laminated each other; and
a hydraulic piston (Pa) actuated by hydraulic pressure supplied to the hydraulic chambers (S1, S2) to selectively engage or disengage the driving clutch discs (9a, 10a) and driven clutch discs (9b, 10b) of either one of the first clutch disc group (9) or the second clutch disc group (10) in accordance with the actuated direction of the hydraulic piston (Pa), the driving power being able to be transmitted at a desirable gear ratio by selectively actuating the hydraulic piston (Pa).

2. A power transmitting apparatus of claim 1 wherein the hydraulic piston (Pa) comprises a hydraulic pressure receiving portion (a) positioned within the hydraulic chambers (S1, S2) for receiving the hydraulic pressure, an actuating portion (b) integrally formed with the hydraulic pressure receiving portion (a) for engaging and disengaging the driving clutch discs (9a, 10a) and the driven clutch discs (9b, 10b) of the first clutch disc group (9) and the second clutch disc group (10), and sealing means (11) for sealing the hydraulic chambers (S1, S2).

3. A power transmitting apparatus of claim 1 or 2 wherein the input shaft (6) is formed with hydraulic oil supplying ports (P1, P2) for supplying the hydraulic chambers (S1, S2) with hydraulic oil, and further formed with a splined portion (α) able to be engaged with the first and second partition members (7, 8) and a non-splined portion (β) in which the openings of the hydraulic oil supplying ports (P1, P2) are formed, and wherein the splined portion (α) and the non-splined portion (β) are formed on the same plane of a radial cross-section of the input shaft (6).

4. A power transmitting apparatus of claim 3 wherein annular sealing members (12, 13) are mounted on the outer circumference of the input shaft (6) so that they encircle the openings of the hydraulic oil supplying ports (P1, P2).
